Europäisches Patentamt

European Patent Office

Office européen des brevets

(11) Publication number: **0 205 645**
**A1**

## EUROPEAN PATENT APPLICATION

(21) Application number: 85107896.4

(22) Date of filing: 26.06.85

(51) Int. Cl.⁴: **B 60 G 17/00**

(43) Date of publication of application: 30.12.86
Bulletin 86/52

(84) Designated Contracting States: **AT BE CH DE FR GB IT LI LU NL SE**

(71) Applicant: **HITACHI, LTD., 6, Kanda Surugadai 4-chome Chiyoda-ku, Tokyo 100 (JP)**

(72) Inventor: **Masuda, Mitsuhiro, 2-1034, Higashiishikawa Katsuta-shi, Ibaraki-ken (JP)**
Inventor: **Igarashi, Osamu, 46-2, Horiguchi Katsuta-shi, Ibaraki-ken (JP)**
Inventor: **Tokuyama, Keiichi, 1292-25, Tarazaki Katsuta-shi, Ibaraki-ken (JP)**
Inventor: **Hasegawa, Taiji, 13-3, Yanagiaoko Nakaminato-shi, Ibaraki-ken (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) Suspension control system.

(57) A microphone (5) which is provided in the vicinity of a front seat of a vehicle either inside or outside the vehicle, detects a vibration developed during run of the vehicle as a vibration sound. Output of the microphone is applied to a bandpass filter (6) having a bandwidth of frequency from 1 Hz to 15 Hz, the vibration of which frequency renders a driver or passengers most uncomfortable. A vibration level of components in the above mentioned bandwidth among the detected vibration is compared with a reference level. When the vibration level of those components exceeds the reference level, the damping force of shock absorbers (4) mounted on wheel axles of the vehicle is reduced.

## TITLE OF THE INVENTION
SUSPENSION CONTROL SYSTEM

BACKGROUND OF THE INVENTION
Field of the Invention

The present invention relates to a suspension control system for a vehicle which controls a suspension, by changing the damping force of shock absorbers which are mounted between a chassis and wheel axles of the vehicle.

Description of the Related Art

Hitherto, a suspension control system for a vehicle is known which automatically controls a damping force of hydraulic shock absorbers provided on wheel axles in order to prevent a nose-diving of a vehicle when brakes are applied suddenly, a rolling upon sharp cornering, and a squating when the vehile is started rapidly.

In such a known control system, the attitude of the vehicle is predictively controlled on the basis of the driver's will or judgement. For example, the degree of rapid acceleration required by the driver is detected by sensing the opening of a throttle valve, and the degree of squating is predicted in advance, based upon the detected degree of acceleration. Then, the damping force of the shock absorbers is increased in accordance with the predicted degree of squating. Similarly, in a case of the nose-diving or the rolling, the degree of deceleration or turning is detected from the movement of a brake pedal or the amount of a steering angle, respectively.

In this manner, the adjustment of the damping force of the shock absorbers is made based upon only the driver's will or judgement. No consideration has been given to the condition of a road surface, so that it was difficult to achieve the safe drive in every condition of the road surface. For instance, when the vehicle runs onto a rough road from a smooth road, not only the driving comfortability is suddenly reduced, but also, in serious cases, it becomes difficult to maintain the safty of driving.

## SUMMARY OF THE INVENTION

An object of the present invention is to provide a suspension control system that is able to realize the comfortable driving on every condition of the road surface.

A feature of the present invention is in that a vibration caused by running of the vehicle is detected and, when a vibration level of components of a particular frequency band among the detected vibration is larger than a predetermined reference level, the damping force of the shock absorber is adjusted to decrease.

## BRIEF DESCRIPTION OF THE DRAWINGS

Fig.1 is a schematic diagram showing a basic construction of a suspention control system according to an embodiment of the present invention; and

Fig.2 shows a detailed circuit of the embodiment shown in Fig.1.

## DESCRIPTION OF THE PREFERRED EMBODIMENT

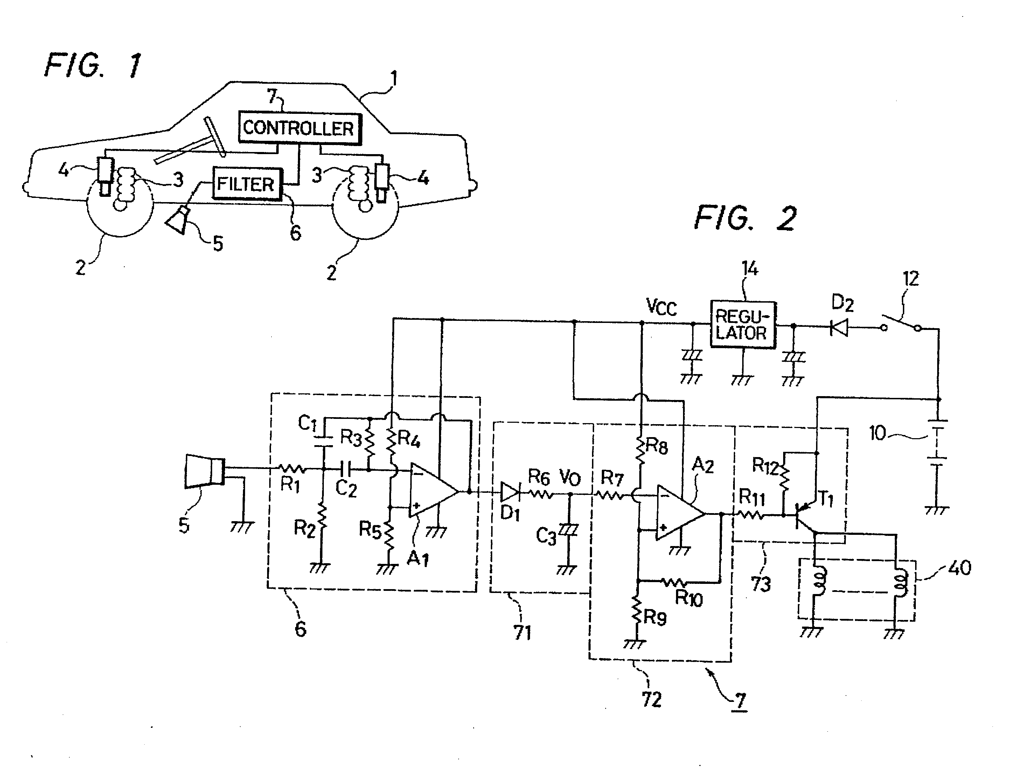

Referring to Figs.1 and 2, the description will be made hereinafter of a suspension control system according to an embodiment of the present invention. Fig.1 is a schematic diagram showing a basic construction of the suspention control system. In the figure, a reference numeral 1 shows a vehicle body, which is supported by wheels 2 through a suspension mechanism composed of springs 3 and shock absorbers 4.

In the shock absorber 4 used for the present invention, the damping force thereof can be adjusted by changing the opening of an orifice through which the fluid within the shock absorber flows. Such a type of the shock absorber is already known. For example, a rotary valve can be available for the orifice with the variable opening and an appropriate actuator such as a solenoid coil changes the opening of the rotary volve in response to a signal applied thereto. Therefore, it should be understood that the shock absorber 4 shown in Fig.1 comprises such an actuator.

During the vehicle runs, the vibration is developed in various parts of the vehicle in accordance with the condition of the road surface. In this embodiment, the developed vibration is sensed as a sound by a sound collector 5 such as a microphone. It is of course that the vibration itself can be detected directly by a known vibration meter, e.g. an acceleration sensor, a vibration pickup and so on. Only from a matter of cost, the sound collector is used in this embodiment. Further, with respect to the location where the sound collector 5 is installed, both the outside and the inside of the vehicle can be chosen arbitrarily. According to the object and concept of the present invention, it is most suitable to provide the sound collector 5 on the floor under front seats or, outside the vehicle, in the vicinity thereof.

The output of the sound collector 5 is sent to a filter 6 which has the function as a bandpass filter. As is well known, such a filter can pass only a signal in a particular band of frequencies. The signal which has passed through the filter 6 is led to a controller 7. The controller 7, after a predetermined signal processing described in detail later, furnishes a control signal, which is applied to the actuator of the shock absorber 4.

By the way, the frequency of vibration which a human feels to be uncomfortable is already known. According to one example of experimental data (cf. Journal of the Society of Automotive Engineers of Japan Vol.36, No.12, 1982. Page 1231 ff "Effects of Vibration and Noise on Human Body" by M. Oshima), a human is most discomforted by the vibration of frequency between several hertz and about 10Hz. On the other hand, a passenger car is said to generally have resonance frequencies of about 1.5Hz and 12 to 13Hz in a part over the spring and in a part under the spring, respectively. In view of these conditions, it is effective to establish the bandwidth of the filter 6 from about 1Hz to about 15Hz. Here, it is to be understood that the resonance frequency is different in accordance with the type or sort of the vehicles so that there can be more or less variance in a low and an upper frequency of the bandwidth of the filter 6.

Fig.2 shows a detailed circuit construction of the whole system of the embodiment shown in Fig.1. In both figures, like parts are identified by the same reference numeral.

With this arrangement when an ignition switch 12 is turned on, the voltage of a battery 10 is supplied to a regulator 14 through a diode $D_2$. The diode $D_2$ is for the purpose of avoiding a trouble if the battery 10 was carelessly connected in the reverse polarity. The regulator 14 furnishes a constant voltage $V_{cc}$ to the filter 6 and the controller 7 as a source voltage for the operation thereof.

Under this condition, the vibration sound developed by a vehicle body is monitored by the sound collector 5. The output of the sound collector 5 is led to the filter 6 which is constisuted with resistors $R_1$ to $R_5$, condensers $C_1$ and $C_2$, and an operational amplifier $A_1$. The filter 6 is formed as a bandpass active filter with a gain of the operational amplifier $A_1$. The bandwidth of the filter 4 is established by the values of the resistors $R_1$ to $R_3$ and the condensers $C_1$ and $C_2$. In this embodiment, the bandwidth of frequency from 1Hz to 15Hz is set up from the point of view, as described above. The resistors $R_4$ and $R_5$ provide a bias voltage for the operational amplifier $A_1$. Usually, two source voltage of different polarity from each other are necessary for the operation of an operational amplifier. By means of the bias voltage provided by the resistors $R_4$ and $R_5$, however, the operational amplifier $A_1$ can operate even in a single source voltage circuit as shown in the figure.

Then, the vibration sound signal output from the filter 6, which includes only components of the particular friquencies, is given to a detection and smoothing section 71 of the controller 7. In this section 71, the vibration sound signal is rectified by a diode $D_1$ and smoothed by a resistor $R_6$ and a condenser $C_3$. A voltage $V_0$ appearing across the condenser $C_3$ is proportional to the level of the vibration which is in the frequency range that gives uncomfortable feeling to the driver and/or passengers. The voltage $V_0$ is applied to a comparing section 72 within the controller 7 which is formed by resistors $R_7$ to $R_{10}$ and an amplifier $A_2$. In the comparing section 72, the voltage $V_0$ is compared with the reference voltage, which is provided by dividing the constant source voltage $V_{cc}$ in accordance with the resistance value of the resistors $R_8$ and $R_9$.

If the voltage $V_0$ becomes larger than the reference voltage, the comparing section 72 produces an output signal. This output signal is led to a driving section 73 of the controller 7 which is constructed with resistors $R_{11}$ and $R_{12}$ and a transistor $T_1$. The transistor $T_1$ is turned on by the output signal from the comparing section72, so that solenoid coils of an actuator 40 are excited by the voltage of the battery 10. Upon excitation of the actuator 40, the opening of the orifice of the shock absorber 4 becomes large, whereby the damping force of the shock absorber 4 is reduced.

If, as reduction of the damping force, the vibration level goes down, the voltage $V_0$ is also decreased. When the voltage $V_0$ becomes lower than the reference voltage, the output of the comparing section 72 disappears so that the transistor $T_1$ turns off and the excitation of the actuator 40 is stopped. As a result, the orifice returns to the condition of the small opening, and the damping force becomes large again. In case the vibration level does not decrease in spite of the reduction of the damping force, the shock absorber 4 is kept at the low damping force.

.In this embodiment, the damping force is controlled at two steps. However, it is possible to provide more steps of control. For that purpose, the reference voltage must be provided correspondingly to the number of the control steps, and the opening of the orifice of the schock absorber has to be controlled accordingly. These technical measures, i.e. providing a comparing circuit with two or more reference voltages and controlling the diameter of the orifice at two or more steps, are obvious to a person having ordinary skill in the art.

Having thus described the various modifications within the knowledge of person in the art may be realized within the scope of the appended claims without departing from the spirit and scope of the present invention.

CLAIMS

1. Suspension control apparatus for a vehicle having shock absorbers mounted between wheel axles and a body of the vehicle, the damping force of which is adjustable, and actuators for controlling the damping force of said shock absorber, characterized by a detecting means for detecting a vibration developed during run of the vehicle and providing an output signal in response to a vibration level of components in a particular frequency band among the detected vibration, and a controlling means for furnishing a driving signal in accordance with the output signal from said detecting means and supplying the driving signal to said actuators thereby to adjust the damping force of said shock absorbers.

2. A suspension control apparatus for a vehicle as defined in Claim 1, wherein the vibration developed during run of the vehicle is detected as a vibration sound by a microphone.

3. A suspension control apparatus for a vehicle as defined in Claim 1, wherein a vibration sensing part of said detecting means is provided in the vicinity of a front seat of the vehicle.

4. A suspension control apparatus for a vehicle as defined in claim 3, wherein the vibration sensing part of said detecting means is installed on a floor inside the vehicle.

5. A suspension control apparatus for a vehicle as defined in Claim 3, wherein the vibration sensing part of said detecting means is installed outside the vehicle.

0205645

- 2 -

6.  A suspension control apparatus for a vehicle as defined in Claim 1, wherein the particular frequency band includes a resonance frequency of the vehicle.

7.  A suspension control apparatuys for a vehicle as defined in claim 6, wherein the particular frequency band is set from about one hertz to about 15Hz.

FIG. 1

FIG. 2

0205645

## European Patent Office

## EUROPEAN SEARCH REPORT

Application number

EP 85 10 7896

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 9, no. 103 (M-377) [1826], 8th May 1985; & JP - A - 59 227 515 (MAZDA K.K.) 20-12-1984 | 1,6 | B 60 G 17/00 |
| | --- | | |
| E,X | EP-A-0 162 818 (FIAT) * Page 4 * | 1,6,7 | |
| | --- | | |
| A | EP-A-0 151 421 (NISSAN) * Pages 2-4; figures * | 1,2 | |
| | ----- | | |

TECHNICAL FIELDS SEARCHED (Int. Cl.4)

B 60 G 17/00

The present search report has been drawn up for all claims

| Place of search | Date of completion of the search | Examiner |
|---|---|---|
| THE HAGUE | 24-02-1986 | FLORES E. |